# EUROPÄISCHE PATENTSCHRIFT

(11) **EP 1 650 492 B1**
(45) Veröffentlichungstag und Bekanntmachung des Hinweises auf die Patenterteilung: **12.03.2008**
(21) Anmeldenummer: 05109578.4
(22) Anmeldetag: 14.10.2005
(51) Int. Cl.: F21V 17/00

(54) **Scheinwerfer für Fahrzeuge und Herstellungsverfahren**
Headlamp for vehicles and and its manufacturing method
Projecteur pour véhicules et procédé de fabrication

(30) Priorität: 19.10.2004 DE 102004050744
(43) Veröffentlichungstag der Anmeldung: 26.04.2006
(73) Patentinhaber: Hella KGaA Hueck & Co., 59552 Lippstadt (DE)
(72) Erfinder: Dirks, Heinz-Michael, 59558, Lippstadt (DE)

(56) Entgegenhaltungen:
- EP-A2- 0 838 368
- US-A1- 2005 024 888
- US-B1- 6 592 239

## Beschreibung

Die Erfindung betrifft einen Scheinwerfer für Fahrzeuge mit einem topfförmigen Gehäuse, das an einem vorderen Rand ein umlaufendes Aufnahmebett aufweist, mit einer eine vordere Öffnung des Gehäuses abschließenden lichtdurchlässigen Abdeckscheibe, mit einem innerhalb des Gehäuses angeordneten Blendrahmen, wobei ein an den Blendrahmen angeformtes Trägerelement zusammen mit einem außenumfangsseitig an demselben vorbefestigten Verbindungselement der Abdeckscheibe in dem mit Dichtungsmasse gefüllten Aufnahmebett des Gehäuses gehaltert ist.

Die Erfindung betrifft ferner ein Verfahren zum Herstellen eines Scheinwerfers für Fahrzeuge, wobei ein Tragelement eines Blendrahmens mit einem Verbindungselement einer Abdeckscheibe verbunden wird und nachfolgend zusammen in ein mit einer Dichtungsmasse versehenes Aufnahmebett eines Randes eines Gehäuses eingetaucht und in der Dichtungsmasse gehaltert wird.

Aus der EP 0 838 368 B1 ist ein Scheinwerfer für Fahrzeuge mit einem topfförmigen Gehäuse bekannt, in dem lichttechnische Komponenten, wie ein Reflektor und eine Lichtquelle, angeordnet sind. Eine vordere Öffnung des Gehäuses ist mittels einer Abdeckscheibe abgeschlossen. Die Abdeckscheibe ist zusammen mit einem Blendrahmen einem vorderen Rand des Gehäuses vorgelagert. Zur Befestigung der Abdeckscheibe und des Blendrahmens an dem Gehäuse wird ein flexibles Tragelement des Blendrahmens rastend mit einem Verbindungselement der Abdeckscheibe in einem Fußbereich derselben verbunden. Nachfolgend werden die Enden des Trägerelementes und des Verbindungselementes zusammen in ein Aufnahmebett des Gehäuserandes eingesetzt, in dem sie mittels einer das Aufnahmebett füllenden Dichtungsmasse gehaltert sind. Nachteilig an dem bekannten Scheinwerfer ist, dass der aus dem Tragelement des Blendrahmens und dem Verbindungselement der Abdeckscheibe gebildete Befestigungsfuß eine relativ inhomogene Formgebung aufweist, die bei Vorliegen von Fertigungstoleranzen die Scheinwerferdichtigkeit beeinträchtigen kann.

Aus der DE 101 09 595 A1 ist ein Scheinwerfer für Fahrzeuge bekannt, bei dem eine Abdeckscheibe durch Laserschweißen mit einem vorderen Rand eines Gehäuses des Scheinwerfers verbunden ist. Hierzu liegt ein Verbindungselement der Abdeckscheibe mit einer Stirnseite flächig an einer Aufnahmefläche des Gehäuserandes an. Es handelt sich hierbei um ein einstufiges Befestigungsverfahren der Abdeckscheibe an dem Gehäuse.

Aufgabe der vorliegenden Erfindung ist es, einen Scheinwerfer für Fahrzeuge sowie ein Verfahren zum Herstellen eines Scheinwerfers anzugeben, so dass zum einen die Verbundfestigkeit zwischen einer Abdeckscheibe und einem Blendrahmen sowie andererseits die Dichtigkeit des aus einem Tragelement des Blendrahmens und einem Verbindungselement der Abdeckscheibe gebildeten Befestigungsfußes in einem Aufnahmebett eines vorderen Gehäuserandes des Scheinwerfers verbessert wird.

Zur Lösung dieser Aufgabe ist die Erfindung in Verbindung mit dem Oberbegriff des Patentanspruchs 1, dadurch gekennzeichnet, dass das Verbindungselement der Abdeckscheibe an einer Längsseite eine Aufnahmefläche aufweist, an der eine Seitennase des Tragelementes durch Laserschweißen verbunden ist.

Ferner ist das erfindungsgemäße Verfahren in Verbindung mit dem Oberbegriff des Patentanspruchs 8 dadurch gekennzeichnet, dass das Tragelement und das Verbindungselement an jeweils einer Längsseite durch Laserschweißen miteinander verbunden werden, bevor ein aus dem Verbindungselement und/oder dem Tragelement gebildeter Befestigungsfuß in das Aufnahmebett eingetaucht wird.

Der Vorteil der Erfindung besteht insbesondere darin, dass durch Laserverschweißen eines Verbindungselementes der Abdeckscheibe mit einem Tragelement des Blendrahmens ein Befestigungsfuß gebildet wird, der eine homogene Formgebung aufweist, dass heißt relativ wenige Kanten und Ausnehmungen aufweist, so dass ein dichter Sitz des Befestigungsfußes in einer Dichtmasse eines Aufnahmebettes des vorderen Gehäuserandes gewährleistet ist.

Nach dem erfindungsgemäßen Verfahren erfolgt in einem ersten Schritt eine feste und spielfreie Verbindung der Abdeckscheibe mit dem Blendrahmen durch Laserschweißen zur Bildung eines gemeinsamen Befestigungsfußes. In einem zweiten Schritt wird der Befestigungsfuß in eine Dichtungsmasse eingetaucht, die in einem Aufnahmebett des vorderen Gehäuserandes angeordnet ist. Hierdurch ist eine dichte Halterung des Befestigungsfußes an dem Gehäusevorderrand gewährleistet.

Nach einer ersten Ausführungsform der Erfindung kann eine Seitennase des Tragelementes des Blendrahmens an eine Aufnahmefläche des Verbindungselementes der Abdeckscheibe in einem Fußbereich derselben durch Laserschweißen verbunden sein, der dann in die Dichtungsmasse des Aufnahmebettes des Gehäuses eingetaucht wird. Die Befestigung ist somit in einem Fußbereich konzentriert, wobei die außerhalb des Fußbereichs verlaufenden Abschnitte des Verbindungselementes bzw. des Tragelementes sich unabhängig voneinander erstrecken können.

Nach einer alternativen Ausführungsform der Erfindung können das Tragelement des Blendrahmens und das Verbindungselement der Abdeckscheibe auch in einem vom Fußbereich entfernt angeordneten Mittenbereich durch Laserschweißen miteinander verbunden sein. Hierdurch kann ein homogener Befestigungsfuß ohne Materialanhäufung gewährleistet sein, der in die Dichtungsmasse des Aufnahmebettes des Gehäusevorderrandes eingetaucht wird. Hierdurch kann die Scheinwerferdichtigkeit verbessert werden. Diese Ausführungsform bietet sich insbesondere dann an, wenn das Tragelement des Blendrahmens und das Verbindungselement der Abdeckscheibe auch in einem Mittenbereich parallel und unmittelbar anliegend zueinander verlaufen.

Nach einer Weiterbildung der Erfindung ist das Tragelement mit einem Überzug versehen, der aus einem für das Laserschweißen festigkeitsmindernden Material besteht. Eine Seitennase des Tragelementes ist derart geformt, dass der Überzug während des Laserschweißvorgangs aufgeschmolzen und selbsttätig an einen Rand der Seitennase weggeschwemmt wird. Hierdurch wird das Basismaterial des Tragelementes freigelegt zur innigen Verschmelzung mit dem Material des Verbindungselementes der Abdeckscheibe.

Nach einer Weiterbildung der Erfindung ist das Tragelement umlaufend um eine optische Achse des Scheinwerfers angeordnet und drückt beim Ausrichten des Blendrahmens zu der Abdeckscheibe selbsttätig an eine Innenseite des Verbindungselementes. Hierdurch ist eine Fixierung des Blendrahmens an der Abdeckscheibe gegeben, so dass sich die Abdeckscheibe und der Blendrahmen in einer eindeutigen Relativlage zueinander befinden. Anschließend kann durch Laserschweißen eine feste Verbindung der beiden Teile erzielt werden.

Weitere Vorteile der Erfindung ergeben sich aus den weiteren Unteransprüchen.

Ausführungsbeispiele der Erfindung werden anhand der Zeichnungen näher erläutert.

Es zeigen:
- Figur 1: einen Vertikalschnitt durch einen Scheinwerfer,
- Figur 2: einen Querschnitt durch ein Tragelement eines Blendrahmens mit einem Fußbereich nach einer ersten Ausführungsform,
- Figur 3: einen Querschnitt durch ein Tragelement eines Blendrahmens mit einem Fußbereich nach einer zweiten Ausführungsform,
- Figur 4: einen Querschnitt durch ein mittels Laserschweißen verbundenes Tragelement des Blendrahmens mit einem Verbindungselement einer Abdeckscheibe des Scheinwerfers,
- Figur 5: einen Querschnitt durch ein mittels Laserschweißen verbundenes Tragelement des Blendrahmens mit einem Verbindungselement einer Abdeckscheibe des Scheinwerfers nach einer weiteren Ausführungsform und
- Figur 6: einen Querschnitt durch ein mittels Laserschweißen verbundenes Tragelement des Blendrahmens mit einem Verbindungselement einer Abdeckscheibe des Scheinwerfers nach einer weiteren Ausführungsform.

Ein Scheinwerfer 1 für Fahrzeuge weist zum einen ein topfförmiges Gehäuse 2 auf, in dem eine Lichtquelle 3 und ein Reflektor 4 angeordnet sind. Dem Gehäuse 2 bzw. dem Reflektor 4 sind eine lichttransparente Abdeckscheibe 5 sowie ein sich zwischen der Abdeckscheibe 5 und dem Reflektor 4 erstreckender Blendrahmen 6 vorgelagert.

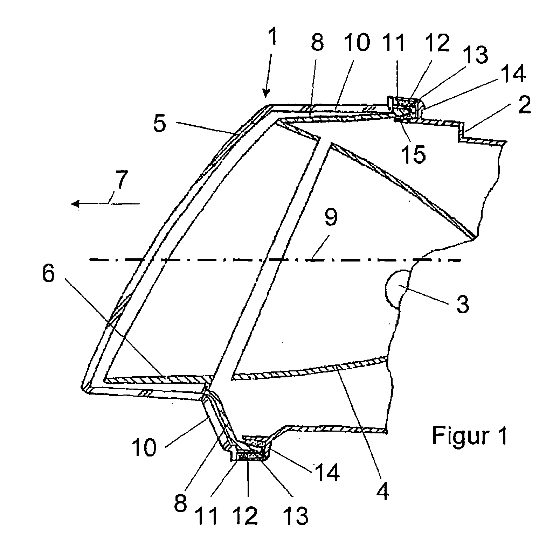

Der Blendrahmen 6 weist im Wesentlichen ein entgegen der Lichtaustrittsrichtung 7 orientiertes Tragelement 8 auf, das sich rahmenartig in Umfangsrichtung um eine Mittelachse 9 des Scheinwerfers 1 erstreckt. Die Abdeckscheibe 5 weist ein sich entgegen der Lichtaustrittsrichtung 7 orientiertes Verbindungselement 10 auf, dass sich im Wesentlichen in Umfangsrichtung um die Mittelachse 9 des Scheinwerfers 1 erstreckt. Wie aus Figur 1 zu ersehen ist, verlaufen das Tragelement 8 und das Verbindungselement 10 parallel zueinander. Das Tragelement 8 liegt mit einer seitlich vorspringenden Seitennase an einer seitlichen Aufnahmefläche des Verbindungselementes 10 an. Die Seitennase und die Aufnahmefläche erstrecken sich entlang der Längsseiten 12 des Tragelementes 8 bzw. des Verbindungselementes 10.

Zur Befestigung der Abdeckscheibe 5 an dem Blendrahmen 6 werden in einem ersten Schritt das Tragelement 8 des Blendrahmens 6 und das Verbindungselement 10 der Abdeckscheibe 5 in einem Fußbereich 11 entlang von Längsseiten 12 derselben miteinander durch Laserschweißen verbunden. Der so gebildete Befestigungsfuß aus dem Verbindungselement 10 und dem Tragelement 8 kann nun in ein mit einer Dichtungsmasse 13 gefülltes Aufnahmebett 14 eines vorderen Randes des Gehäuses 2 eingetaucht und in derselben gehaltert werden. Hierzu wird der Befestigungsfuß bzw. die Abdeckscheibe 5 sowie der Blendrahmen 6 entgegen der Lichtaustrittsrichtung 7 unter umlaufendes Einsetzen des Befestigungsfußes in das Aufnahmebett 14 bewegt. Der Laserschweiß-Verbindungsbereich befindet sich bei dieser Ausführungsform innerhalb des mit der Dichtungsmasse 13 gefüllten Aufnahmebettes 14.

Zur Ausrichtung und Fixierung des Tragelementes 8 an dem Verbindungselement 10 vor dem Laserschweißvorgang ist es förderlich, wenn das umlaufende Tragelement 8 unter einer Vorspannung an einer Innenseite 15 des Verbindungselementes 10 anliegt. Hierdurch kann eine eindeutige Relativlage der Abdeckscheibe 5 zu dem Blendrahmen 6 erzielt werden, die die durch den nachfolgenden Laserschweißvorgang verfolgte Verbundfestigkeit begünstigt.

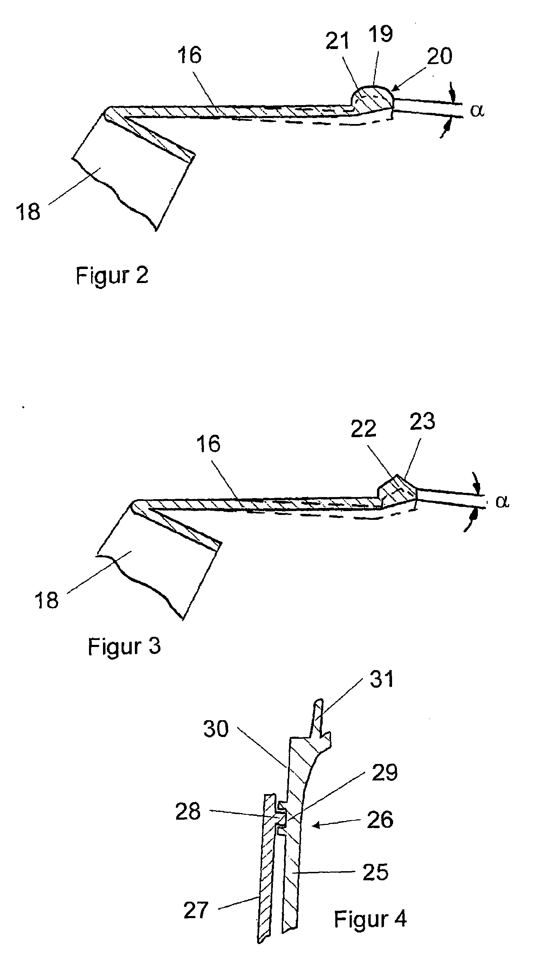

Nach einer Ausführungsform eines Tragelementes 18 gemäß Figur 2 ist dieser mit einem festigkeitsmindernden Überzug 19 versehen. Der Überzug 19 kann beispielsweise durch eine Aluminiumbedampfung erzeugt sein.

Damit der Überzug 19 beim Laserschweißvorgang aufschmelzen und aus einem mittleren Bereich 20 einer Seitennase 21 des Tragelementes 18 abfließen kann, ist die Seitennase 21 im Querschnitt bogenförmig ausgebildet. Die Seitennase 21 weist somit eine konvexförmige Erhabenheit auf, die sich umlaufend in einer Ebene erstreckt, die senkrecht zur optischen Achse bzw. Mittelachse 9 des Scheinwerfers 1 erstreckt. Es kommt somit an dem Rand zu einer Materialanhäufung, wohingegen ein Basismaterial 16 des Seitennase 21, 22 freigelegt und flächig mit der Aufnahmefläche des Verbindungselementes 10 durch Laserschweißen verbunden werden kann.

In Figur 2 ist der Ausgangszustand es Tragelementes 18 dargestellt. Um einen Winkel α nach innen verschwenkt ist das Tragelement 18 gestrichelt dargestellt, wobei sich das Tragelement 18 unter Vorspannung an der Innenseite 15 des Verbindungselementes 10 angelegt ist.

Nach einer alternativen Ausführungsform des Tragelementes 18 gemäß Figur 3 ist eine sich in radialer Richtung nach außen verjüngende Seitennase 22 vorgesehen, die eine spitze Erhabenheit 23 aufweist. Die spitze Erhabenheit 23 erstreckt sich wie die Erhabenheit der Seitennase 21 in Richtung der umlaufenden Laserschweißnaht, die in einer Ebene verläuft, die senkrecht zur optischen Achse bzw. der Mittelachse 9 des Scheinwerfers 1 ist.

Nach einer weiteren Ausführungsform der Erfindung gemäß Figur 4 ist ein Verbindungselement 25 der Abdeckscheibe 5 vorgesehen, das in einem Mittenbereich 26 desselben durch Laserschweißen mit einer in einem Fußbereich eines Tragelementes 27 des Blendrahmens 6 verlaufenden Seitennase 28 verbunden ist. Hierzu weist das Verbindungselement 25 eine Aufnahmefläche 29 an einer inneren Längsseite 30 auf, die sich als eine Nut in Umfangsrichtung erstreckt. Die Seitennase 28 des Tragelementes 27 ist in radialer Richtung seitlich vorspringend ausgebildet und greift rastend zur Vorfixierung in die Aufnahmefläche 29 ein. Nachfolgend wird durch Laserschweißen eine feste Verbindung zwischen dem Tragelement 27 und dem Verbindungselement 25 erzielt.

Im vorliegenden Ausführungsbeispiel ist die Seitennase 28 im Querschnitt rechteckförmig ausgebildet und weist keinen Überzug auf. Für den Fall, dass das Tragelement 27 einen Überzug aufweist, ist die Seitennase 28 beispielsweise entsprechend den Ausführungsformen gemäß Figur 2 und 3 mit einer mittleren Erhabenheit versehen.

Dadurch, dass der Laserschweißverbindungsbereich in einem Mittenbereich 26 des Verbindungselementes 25 angeordnet ist, bildet lediglich das freie Ende 31 des Verbindungselementes 25 den Befestigungsfuß, der in das mit der Dichtungsmasse 13 gefüllte Aufnahmebett 14 eingesetzt und in demselben gehaltert wird. Hierdurch kann die Querausdehnung des Aufnahmebettes 14 in Folge des dünneren Befestigungsfußes kleiner dimensioniert sein.

Vorteilhaft weist das Verbindungselement 25 eine konstante Wanddicke auf, die sich quasi durchgehend über den gesamten Mittenbereich 26 erstreckt. Vorteilhaft wird hierdurch gewährleistet, dass die Formfüllung erleichtert wird.

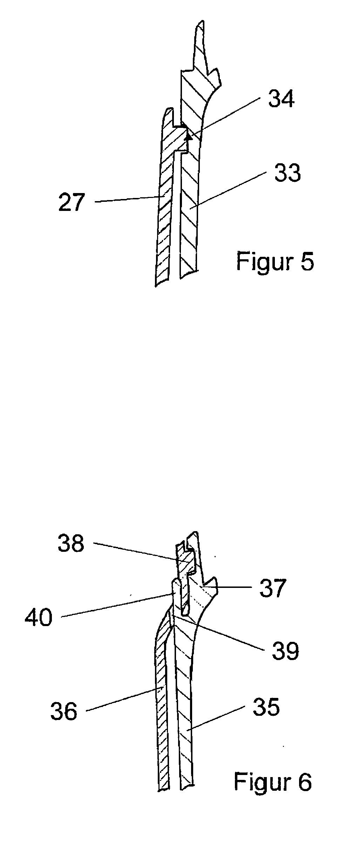

Nach einer alternativen Ausführungsform eines Verbindungselementes 33 gemäß Figur 5 weist dasselbe in einem Verbindungsbereich 34 zu dem Tragelement 27 eine lokale Materialschwächung auf. Hierdurch lässt sich eine einfachere Schiebergeometrie bei der Herstellung des Verbindungselementes 33 realisieren. Darüber hinaus ist die Durchstrahldicke geringer für den Laserstrahl, der nach dem Laserdurchstrahlverfahren zuerst quer durch das lasertransparente Verbindungselement 33 auf die Verbindungsstelle 34 geleitet wird, in der es durch das Material des Tragelementes 27 absorbiert wird. Nach einer alternativen Ausführungsform eines Verbindungselementes 35 und eines Tragelementes 36 gemäß Figur 6 können rastend miteinander verbundene Enden 37 und 38 des Verbindungselementes 35 bzw. des Tragelementes 36 mittels des Laserdurchstrahlverfahrens verbunden werden. Das Tragelement 36 weist eine Freimachung 39 auf, durch die Haltevorsprünge 40 des Verbindungselementes 35 eingreifen können. Die Verbindung der Enden 38, 37 des Verbindungselementes 35 bzw. des Tragelementes 36 erfolgt durch das oben beschriebene Laserdurchstrahlverfahren, wobei nach der Montage des Scheinwerfers eine Relativbewegung des Verbindungselementes 35 und des Tragelementes 36 sicher vermieden wird.

## Patentansprüche

1. Scheinwerfer für Fahrzeuge mit einem topfförmigen Gehäuse, das an einem vorderen Rand ein umlaufendes Aufnahmebett aufweist, mit einer eine vordere Öffnung des Gehäuses abschließenden lichtdurchlässigen Abdeckscheibe, mit einem innerhalb des Gehäuses angeordneten Blendrahmen, wobei ein an den Blendrahmen angeformtes Trägerelement zusammen mit einem außenumfangsseitig an demselben vorbefestigten Verbindungselement der Abdeckscheibe in dem mit Dichtungsmasse gefüllten Aufnahmebett des Gehäuses gehaltert ist, **dadurch gekennzeichnet, dass** das Verbindungselement (10, 25) der Abdeckscheibe (5) an einer Längsseite (12) eine Aufnahmefläche (29) aufweist, an der eine Seitennase (21, 22, 28) des Tragelementes (8, 18, 27) durch Laserschweißen verbunden ist.

2. Scheinwerfer nach Anspruch 1, **dadurch gekennzeichnet, dass** die Aufnahmefläche (29) des Verbindungselementes (10, 25) der Abdeckscheibe (5) und/oder die Seitennase (21, 22) des Tragelementes (8) in einem Fußbereich derselben zur Bildung eines Befestigungsfußes angeordnet sind, derart, dass der so gebildete Laserschweiß-Verbindungsbereich innerhalb des mit der Dichtungsmasse (13) versehenen Aufnahmebetts (14) des Gehäuses (2) verläuft.

3. Scheinwerfer nach Anspruch 1, **dadurch gekennzeichnet, dass** die Aufnahmefläche (29) des Verbindungselementes (25) der Abdeckscheibe (5) und/oder die korrespondierende Seitennase (28) des Tragelementes (8) in einem vom Fußbereich entfernt angeordneten Mittenbereich (26) des Verbindungselementes (25) angeordnet sind, derart, dass der so gebildete Laserschweiß-Verbindungsbereich außerhalb des mit der Dichtungsmasse (13) gefüllten Aufnahmebettes (14) des Gehäuses (2) verläuft.

4. Scheinwerfer nach einem der Ansprüche 1 bis 3, **dadurch gekennzeichnet, dass** das Tragelement (18) mit einem Überzug (19) versehen ist und dass die Seitennase (21, 22) derart geformt und/oder während des Laserschweißvorgangs positioniert ist, dass der Überzug (19) aufgeschmolzen und selbsttätig an einen Rand der Seitennase (21, 22) weggeschwemmt wird.

5. Scheinwerfer nach einem der Ansprüche 1 bis 4, **dadurch gekennzeichnet, dass** die Seitennase (21, 22) eine konvexförmige oder spitze Erhabenheit aufweist, die sich in Richtung der Laserschweißnaht erstreckt.

6. Scheinwerfer nach einem der Ansprüche 1 bis 5, **dadurch gekennzeichnet, dass** das Tragelement (8, 18, 27) sich umlaufend und von innen unter Vorspannung an eine Innenseite des Verbindungselementes (10, 25) anliegend erstreckt.

7. Scheinwerfer nach einem der Ansprüche 1 bis 6, **dadurch gekennzeichnet, dass** die Aufnahmefläche (29) des Verbindungselementes (25) als eine umlaufende Nut ausgebildet ist, die sich auf einer Innenseite des Verbindungselementes (25) erstreckt.

8. Verfahren zum Herstellen eines Scheinwerfers für Fahrzeuge, wobei ein Tragelement eines Blendrahmens mit einem Verbindungselement einer Abdeckscheibe verbunden wird und nachfolgend zusammen in ein mit einer Dichtungsmasse versehenes Aufnahmebett eines Randes eines Gehäuses eingetaucht und in der Dichtungsmasse gehaltert wird, **dadurch gekennzeichnet, dass** das Tragelement (8, 18, 27) und das Verbindungselement (10, 25) an jeweils einer Längsseite (12) durch Laserschweißen miteinander verbunden werden, bevor ein aus dem Verbindungselement (10, 25) und/oder dem Tragelement (8, 18, 27) gebildeter Befestigungsfuß in das Aufnahmebett (14) eingetaucht wird.

9. Verfahren nach Anspruch 8, **dadurch gekennzeichnet, dass** das unter Vorspannung stehende Trägerelement (8, 18, 27) unter Einsetzen einer Seitennase (28) desselben in eine nutförmige Aufnahmefläche (29) des Verbindungselementes (25) an demselben vorfixiert wird.

10. Verfahren nach Anspruch 8 oder 9, **dadurch gekennzeichnet, dass** die mit einem Überzug versehene und in einem mittleren Bereich vorspringende Seitennase (21, 22) des Tragelementes (18) derart aufgeschmolzen wird, dass der Überzug von der Mitte nach außen zum Rand wegtransportiert wird und ein darunter liegendes Basismaterial zur Verbindung mit einem Basismaterial des Verbindungselementes freigelegt wird.

## Claims

1. Headlamp for vehicles with a pot-shaped housing a front edge which has a circumferential retaining bed, with a transparent cover lens over a front opening of the housing, with a glare shield located inside the housing, where a carrying element molded to the glare shield and a link piece of the cover lens previously attached to the outer circumference of the carrying element are held by the retaining bed filled with sealant, wherein the long side (12) of the link piece (10, 25) of the cover lens (5) features a holding area (29) that a lug (21, 22, 28) sticking out from the side of the carrying element (8, 18, 27) is laser-welded to.

2. Headlamp as in claim 1, wherein the holding area (29) of the link piece (10, 25) of the cover lens (5) and/or the lug (21, 22) on the side of the carrying element (8) is located along the foot to make up a foot for attachment such that the laser-welded seam is located in the sealant-filled (13) retaining bed (14) of the housing (2).

3. Headlamp as in claim 1, wherein the holding area (29) of the link piece (25) of the cover lens (5) and/or the corresponding lug (28) on the side of the carrying element (8) is located along central section (26) of the link piece (25) that is not near the foot area such that the resulting laser-welded seam is located outside the sealant-filled (13) retaining bed (14) of the housing (2).

4. Headlamp as in one of claims 1 to 3, wherein the carrying element (18) has a sleeve (19) over it and wherein the lug (21, 22) on the side is shaped and/or placed by laser welding such that the sleeve (19) is fused on and automatically swept away towards the edge of the lug (21, 22).

5. Headlamp as in one of claims 1 to 4, wherein the lateral lug (21, 22) is raised to a convex or pointed shape running in the same direction as the laser weld seam.

6. Headlamp as in one of claims 1 to 5, wherein the prestressed carrying element (8, 18, 27) goes all the way around and contacts the inside of the link piece (10, 25).

7. Headlamp as in one of claims 1 to 6, wherein the retaining area (29) of the link piece (25) is shaped like a circumferential groove along an inner side of the link piece (25).

8. Method of manufacturing a headlamp for vehicles, where a carrying element of a glare shield and a link piece of a cover lens are first assembled and then immersed and afterwards held by a sealant-filled retaining bed along the edge of a housing, wherein a long side (12) of the carrying element (8, 18, 27) is laser-welded to a long side (12) of the link piece (10, 25) before an attachment foot protruding from the link piece (10, 25) and/or the carrying element (8, 18, 27) is immersed in the retaining bed (14).

9. Method as in claim 8, wherein a lug (28) protruding from the side of a prestressed carrying element (8, 18, 27) is placed in a groove-like retaining area (29) of the link piece (25) to preliminarily connect the lug (28) to the link piece (25).

10. Method as in claim 8 or 9, wherein the lug (21, 22) on a side of the carrying element (18) is covered by a sleeve, protrudes from a central section of the carrying element (18), and is fused on such that the sleeve is moved away from the middle towards the outer edge to provide access to a base material underneath used to connect to a base material of the link piece.

## Revendications

1. Projecteur pour véhicules, avec un boîtier en forme de pot présentant un logement périphérique sur un bord avant, avec une vitre de recouvrement transparente fermant une ouverture avant du boîtier, avec un écran anti-éblouissant disposé à l'intérieur du boîtier, un élément de support formé d'un seul tenant avec l'écran anti-éblouissant étant maintenu, ensemble avec un élément d'assemblage de la vitre de recouvrement prémonté sur le périmètre extérieur dudit écran, dans le logement du boîtier rempli de mastic d'étanchéité, **caractérisé en ce que** l'élément d'assemblage (10, 25) de la vitre de recouvrement (5) présente sur un côté longitudinal (12) une surface de logement (29) à laquelle un tenon latéral (21, 22, 28) de l'élément de support (8, 18, 27) est relié par soudage au laser.

2. Projecteur selon la revendication 1, **caractérisé en ce que** la surface de logement (29) de l'élément d'assemblage (10, 25) de la vitre de recouvrement (5) et/ou le tenon latéral (21, 22) de l'élément de support (8) sont disposés dans une zone de bride de ces éléments de façon à former une bride de fixation telle que la zone d'assemblage par soudage laser ainsi formée s'étend à l'intérieur du logement (14) muni du mastic d'étanchéité (13) du boîtier (2).

3. Projecteur selon la revendication 1, **caractérisé en ce que** la surface de logement (29) de l'élément d'assemblage (25) de la vitre de recouvrement (5) et/ou le tenon latéral (28) correspondant de l'élément de support (8) sont disposés dans une zone médiane (26) éloignée de la zone de bride de l'élément d'assemblage (25) de telle façon que la zone d'assemblage par soudage laser ainsi formée s'étend à l'extérieur du logement (14) rempli de mastic d'étanchéité (13) du boîtier (2).

4. Projecteur selon l'une des revendications 1 à 3, **caractérisé en ce que** l'élément de support (18) est doté d'un revêtement (19) et **en ce que** le tenon latéral (21, 22) est formé et/ou positionné pendant l'opération de soudage au laser de telle façon que le revêtement (19) est fondu et enlevé en s'écoulant de lui-même sur un bord du tenon latéral (21, 22).

5. Projecteur selon l'une des revendications 1 à 4, **caractérisé en ce que** die tenon latéral (21, 22) présente un relief de forme convexe ou pointu qui s'étend dans le sens du cordon de soudure au laser.

6. Projecteur selon l'une des revendications 1 à 5, **caractérisé en ce que** l'élément de support (8, 18, 27) s'étend périphériquement et en appui à l'intérieur avec une précontrainte sur une face interne de l'élément d'assemblage (10, 25).

7. Projecteur selon l'une des revendications 1 à 6, **caractérisé en ce que** la surface de logement (29) de l'élément d'assemblage (25) est réalisée sous la forme d'une rainure périphérique qui s'étend sur une face interne de l'élément d'assemblage (25).

8. Procédé de fabrication d'un projecteur pour véhicules, dans lequel un élément de support d'un écran anti-éblouissant est relié à un élément d'assemblage d'une vitre de recouvrement et ensuite enfoncé ensemble avec ce dernier dans un logement rempli de mastic d'étanchéité sur un bord d'un boîtier et maintenu dans le mastic d'étanchéité, **caractérisé en ce que** l'élément de support (8, 18, 27) et l'élément d'assemblage (10, 25) sont reliés l'un à l'autre sur un côté longitudinal respectif (12) par soudage au laser avant d'enfoncer une bride de fixation formée par l'élément d'assemblage (10, 25) et/ou l'élément de support (8, 18, 27) dans le logement (14).

9. Procédé selon la revendication 8, **caractérisé en ce que** l'élément de support précontraint (8, 18, 27) est prémonté sur l'élément d'assemblage (25) en introduisant un tenon latéral (28) dudit élément de support dans une surface de logement en forme de rainure (29) dudit élément d'assemblage (25).

10. Procédé selon la revendication 8 ou 9, **caractérisé en ce que** le tenon latéral (21, 22) doté d'un revêtement et faisant saillie dans une zone médiane de l'élément de support (18) est fondu de telle façon que le revêtement est enlevé en l'entraînant du milieu vers l'extérieur jusqu'au bord et qu'un matériau de base sous-jacent est dégagé en vue de l'assemblage avec un matériau de base de l'élément d'assemblage.
